# EUROPEAN PATENT SPECIFICATION

(11) **EP 1 770 940 B1**
(45) Date of publication and mention of the grant of the patent: **06.10.2010**
(21) Application number: 05109127.0
(22) Date of filing: 30.09.2005
(51) Int. Cl.: H04L 29/06, H04L 12/28

(54) **Method and apparatus for establishing a communication between a mobile device and a network**
Verfahren und Vorrichtung zum Aufbau einer Verbindung zwischen einer mobilen Vorrichtung und einem Netzwerk
Procédé et dispositif pour établir une connexion de communication entre un dispositif mobile et un réseau

(43) Date of publication of application: 04.04.2007
(73) Proprietor: Alcyone Holding S.A., 2449 Luxembourg (LU)
(72) Inventor: Ioannidis, Efstathios, S1 4EW, Sheffield (GB)
(74) Representative: Montevecchi, Emma

(56) References cited:
- WO-A-03/077572
- WO-A-03/094438
- WO-A-2005/036852
- US-A1- 2003 176 188
- ALA-LAURILA J ET AL: "WIRELESS LAN ACCESS NETWORK ARCHITECTURE FOR MOBILE OPERATORS" IEEE COMMUNICATIONS MAGAZINE, IEEE SERVICE CENTER,NEW YORK, NY, US, vol. 39, no. 11, November 2001 (2001-11), pages 82-89, XP001107810 ISSN: 0163-6804

## Description

The present invention relates to establishing communication between a mobile device and a network through an access network.

Mobile Cellular networks have now become widespread through the world. For the most part these mobile networks are constructed using one or more of the following cellular technologies: GSM, UMTS, EDGE and CDMA. These are all considered Wide Area Network (WAN) technologies since their radio coverage is "wide", meaning that they span entire areas, cities, regions or countries. However another wireless technology has emerged that covers a reduced local area (hotspot) and thus named Wireless Local Area Network (WLAN). The term WLAN is typically used to identify the Institute of Electrical and Electronic Engineers' (IEEE) 802.11 wireless standard, sometimes called WiFi. Both Mobile Cellular and WLAN networks can be used to transport Internet Protocol (IP) traffic and are important in the wireless market. However Mobile Cellular technologies and WLAN technologies have been developed separately and thus networks made with these technologies cannot be easily integrated nor managed efficiently. This makes it difficult for a mobile operator to make good use of these different types of technologies in a single network that is easy to manage, build and expand.

In order to integrate WLAN and Cellular Mobile networks it is necessary to introduce new functionality to glue them together. The mobile standardisation group called the Third Generation Partnership Project (3GPP) has performed some work to specify this functionality in document TS 23.234. According to this model a WLAN UE (User Equipment) uses the IEEE 802.1x (abbreviated to 802.1x) protocol and the Extensible Authentication Protocol (EAP) methods in order to prove that it is allowed to gain access to the WLAN network. In particular the EAP-SIM and EAP-AKA authentication methods are applicable here. The authentication information used to gain access to the network is based on the well-known cellular authentication methods based on the Subscriber Information Module (SIM) card. In this case the SIM card would be accessible by the WLAN UE just as it is accessible by a normal mobile phone. With reference to 0, according to the 3GPP method the WLAN UE 100 uses EAP-SIM or EAP-AKA authentication protocol transported by the IEEE 802.1x to exchange authentication information with the IEEE 802.1x capable Access Point (AP) 101. The 802.1x AP 101 includes AAA (Authentication, Authorisation and Accounting) client functionality, which typically means it acts as a RADIUS client. The AP 101 then forwards the EAP authentication information to the local visited AAA server 103. Typically this means that the AP 101 functions as a AAA client towards the visited AAA server 103. The visited AAA server 103 uses the EAP authentication information to determine the WLAN UE's Home AAA server. The visited AAA server 103 then passes the authentication information to the home AAA server 110. The EAP/AAA server and HLR proxy 107 processes the authentication information and checks it against the authentication triplets or quintuplets obtained from the HLR 109. Based on these checks the EAP/AAA server 107 replies to AP 101 with an accept or reject message. As a consequence the AP 101 forwards the appropriate 802.1x EAP success or reject message to the WLAN UE 100. If the message indicated successful authentication then the 802.1x AP 101 allows the WLAN UE 100 to use the WLAN network to communicate towards other peers, Internet or external networks 108. Otherwise in case the authentication was rejected the 802.1x AP 101 will not allow the WLAN UE 100 to make use of the WLAN access network.

In order to perform the above, all WLAN Access Points (APs) in all WLAN Access Networks must support the 802.1x standard that allows transport of the EAP-SIM and EAP-AKA authentication methods over IEEE 802 networks (including Ethernet and WLAN) between UE and ultimately the home AAA server. However the majority of WLAN APs deployed today in WLAN networks do not support the 802.1x standard, such as simple AP 102 in 0. Also support of EAP-SIM and EAP-AKA on 802.1x in WLAN UEs may be slow to be adopted and may run into difficulties.

Typically current WLAN Access Networks include a WLAN Access Server (AS) 105 in 0. This is currently used to provide access control by authenticating users and allowing packet communications destined to or originated from authenticated users. When a WLAN UE connects to a WLAN Access Network 106, a standard web browser needs to be started on the WLAN UE. The WLAN AS 105 intercepts the web page request (typically the browser's "home page" at start-up) being accessed and redirects it to an authentication web page where the user is to enter authentication credentials such as username and password or valid credit card information. If these credentials are entered correctly then the WLAN AS opens up access for that WLAN UE by opening the communication ports for packets coming from and destined to the WLAN UE's IP address and MAC address. When 802.1x and EAP authentication are used, as described previously, WLAN ASs no longer have a role since the authentication functionality is distributed to the APs. The idea of discarding an existing investment such as the WLAN AS 105 may not make sense to all WLAN Access Network providers, since the actual centralised access control functions can in principle be reused. Also if a WLAN Access Network contains both 802.1x capable APs and simple APs the interoperability between the WLAN AS and the 802.1x authentication methods poses problems.

There are also problems with the WLAN AS 105 redirecting the user to another web page at start-up. This approach is not always applicable, since some WLAN UEs do no have web browsers. In addition it can be confusing for a user to have to open up the web browser and perform an authentication before starting the application that was required in the first place (e.g. email application).

Therefore it would be desirable to provide a solution for WLAN Cellular interworking that reuses existing functionality in the WLAN Access Network and therefore works independently of the type of WLAN APs and the WLAN AS in the WLAN Access Network. It would also be desirable that such a solution is independent of the web browsing application. Such a solution should be equally applicable to any wireless technology based on the Internet Protocol, but for simplicity this invention will use WLAN technology as reference.

The present invention seeks to provide a method of, a system for and a gateway for establishing communication between a mobile device and a network through an access network according to the appended claims 1 to 44.

International Patent Application WO 03/094438 in the name of Telefonaktiebolaget LM Ericsson, refers to a system, apparatus and method for carrying out a SIM-based authentication of a user accessing a WLAN, without having provided yet an IP connectivity, along with a layer-2 encryption mechanism for protecting the path between the Terminal Equipment and the Mobile Network. Therefore the invention provides a method for establishing a PPP-tunnolling for AKA dialogues between the terminal and an Access Controller for accessing the mobile network owning the SIM. the invention also provides an Access Controller (AC) comprising a Point-to-Point over Ethernet (PPPoE) server for tunnelling AKA dialogues from a PPP-client installed in the terminal for the same purpose, and also comprising a traffic Router and a RADIUS-cient. The AC thus including the RADIUS-client is interposed between a RADIUS-proxy accessed from the access point (AP) in the WLAN and the mobile network where SIM-based authentication is carried out. International Patent Application WO 2005/036852 in the name of Nokia Corporation, proposes a system for authenticating and authorizing network services comprising: a mobile device being adopted to, upon receipt of an Information message Indicating at least one network access type, determine the network access type, to create a start message containing at least a user identity, and to encapsulate the start message in an authentication message compatible with the access network identified in the information message, and an access controller for reading the encapsulated message from the mobile and forwarding the encapsulated message to an authentication server identified in the encapsulated message. The invention also proposes a corresponding method for authentication and authorizing network services, and an access control device, a subscriber device and a router device.

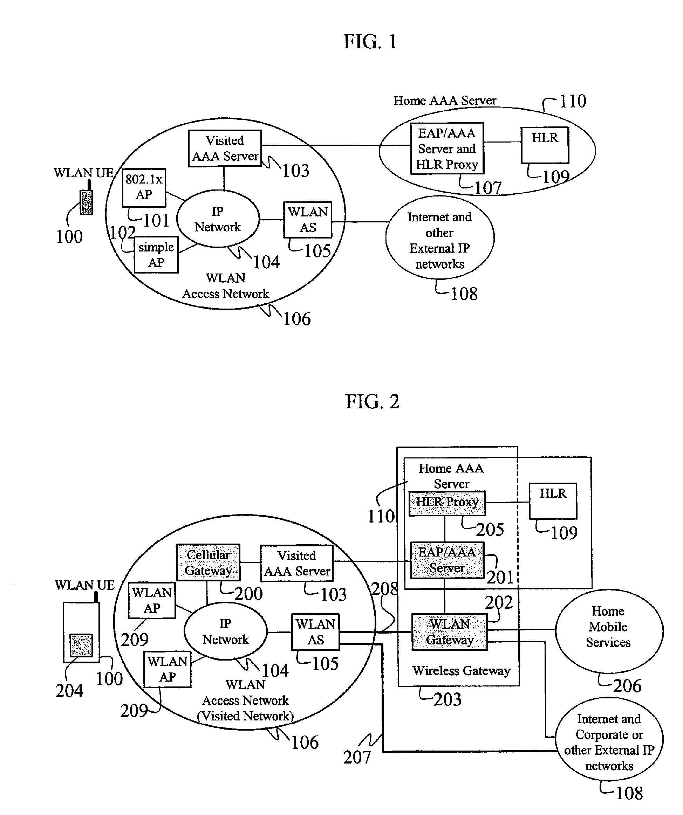

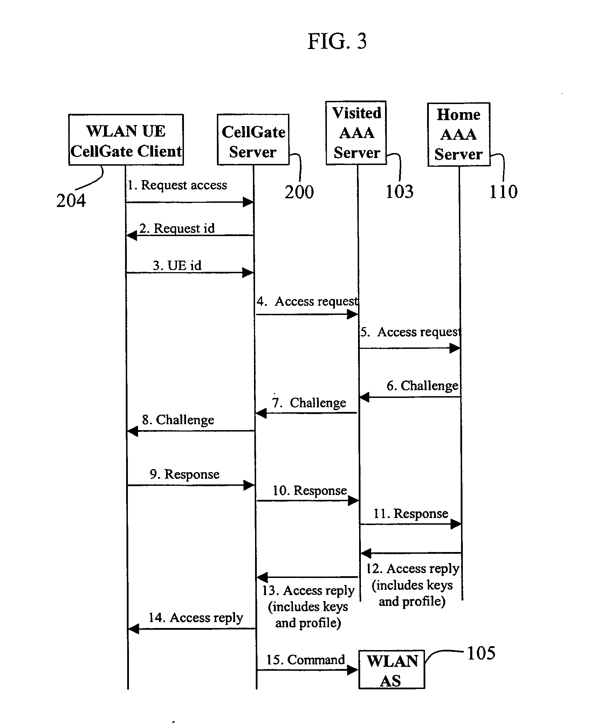

Embodiments of the present invention will now be described, by way of example, with reference to Figures 2 and 3 of the accompanying drawings in which:
Figure 1 illustrates a portion of a conventional WLAN network architecture and 3GPP-WLAN network architecture related to authentication;
Figure 2 illustrates an embodiment of a WLAN Cellular architecture in accordance with the present invention;
Figure 3 illustrates message exchange between a WLAN UE, a Cellular Gateway server, a Visited AAA server and a Home AAA server shown in Figure 2 in order to authenticate and authorise the WLAN UE for network access.

Referring to Figure 2, an embodiment of an improved wireless local area network (WLAN) Cellular network architecture in accordance with the present invention is shown. In Figure 2, the same reference numerals are used for features which have already been described with reference to Figure 1.

A Cellular Gateway (CellGate) Server 200 (authenticating gateway) is placed in a WLAN Access Network 106 (access network). A WLAN user equipment (UE) 100 (mobile device) is subscribed to a Home Cellular Operator. The Home Cellular operator typically manages a Wireless Gateway 203, a Home Location Register (HLR) 109 and a Home Mobile Services 206 that are situated in the Home network. The Home Cellular operator also distributes CellGate software client 204 that runs on the WLAN UE 100 to a plurality of WLAN UEs. This invention is not limited to such a specific location or management of these network nodes, but this scenario is used as a means to most clearly describe the invention.

When the WLAN UE 100 connects to the WLAN Access Network 106, the CellGate client 204 accesses the Subscriber Identity Module (SIM) or Universal Subscriber Identity Module (USIM) on the WLAN UE and communicates with the CellGate Server 200 to authenticate the WLAN UE. The communication between CellGate client 204 and server 200 is based on EAP. The CellGate Server 200 then functions as an Authentication, Authorization and Accounting (AAA) client towards the local Visited AAA server 103. The local Visited AAA server 103 identifies the WLAN UE's Home network by inspecting the authentication information and it passes the AAA message towards the appropriate Home AAA Server 110. In the Home network the EAP/AAA Server 201 is configured with the address of the Home AAA server and therefore processes AAA traffic directed to the Home AAA server. The Home AAA server examines the authentication information and determines whether it is a Cellular WLAN SIM-based authentication (e.g. EAP-SIM or EAP-AKA). If it is a SIM-based procedure the EAP/AAA Server 201 will process the request to verify the device credentials, which may or may not be directly related to the user of such device. A Challenge/Response security procedure is performed as will be described in more detail later. The EAP/AAA Server 201 will determine whether the correct credentials have been supplied by sending a request to the HLR Proxy 205 to obtain the appropriate user's security quintuplets or triplets. The HLR Proxy 205 processes this request, obtains the set of security quintuplets or triplets by requesting them from the HLR 109 and returns them to the EAP/AAA Server 201. The EAP/AAA Server 201 then checks the requesting security quintuplets or triplets against the information supplied by the WLAN UE. If the security information supplied by the WLAN UE matches with that returned by the HLR then the WLAN UE has been successfully authenticated, otherwise the authentication has failed. If the authentication is successful then the WLAN UE is able to utilise the WLAN Access Network to send and receive data traffic as will be described in more detail later. The authentication result is sent from the Home AAA Server 110 to the Visited AAA Server 103 and finally to the CellGate Server 200. The CellGate Server 200 will then inform the WLAN UE of the result. In the case of a successful authentication the CellGate Server 200 also communicates with a WLAN Access Server (AS) 105 in order to unblock communication for the WLAN UE. This is done by sending the WLAN UE's IP address and layer 2 (MAC) address from the CellGate Server to the WLAN AS, so that the WLAN AS allows traffic to and from this WLAN UE to pass through it. The CellGate Server 200 also sends the WLAN UE profile to the WLAN AS 105 so that the WLAN AS may perform special handling of the WLAN UE's traffic as will be described in more detail later. Once this procedure is complete a hierarchy of keys will be established as will be described in more detail later. These keys may be used by the WLAN UE to establish secure communication between itself and network elements such as the WLAN AS 105 or the WLAN Gateway 202 as will be described in more detail later.

### Message Exchange

Referring to Figure 3, message exchange between nodes is shown in more detail.

When the WLAN UE 100 connects to the WLAN access network 106 (Figure 2) the WLAN UE CellGate software client 204 requests access from the CellGate Server 200 in message 1. This prompts a message from the CellGate server for the WLAN UE's identity in message 2. The identity can be the WLAN UE's Network Address Identifier (NAI) or any other identifier that can be used to uniquely identify the WLAN UE and the realm that it belongs to. Message 2 also contains information on the WLAN Access Network Provider, such as the operator's name and the capabilities or services available. The WLAN UE CellGate client 204 replies with its identity in message 3.

An Access request (including the WLAN UE's identity) is then sent from the CellGate server 200 to the local Visited AAA 103 server in message 4. The Visited AAA server 103 in turn forwards the Access Request to the home AAA server 110 in message 5.

The home AAA server 110 authenticates the WLAN UE CellGate client 204 by sending a cryptographic challenge that requires a particular cryptographic response based on the WLAN UE's shared secret and a sequence number. The challenge is sent in message 6 to the WLAN UE's local visited AAA server 103. This challenge is sent in Message 7 from the local visited AAA server 103 to the CellGate server 200. The CellGate server 200 forwards the challenge to the WLAN UE Cellgate client 204 in message 8.

The WLAN UE CellGate client 204 verifies whether the challenge is correct based on its knowledge of the shared secret and the sequence number. This allows the WLAN UE to authenticate the home AAA server 110 (i.e. determine whether the Home AAA server that issued the challenge is really the WLAN UE's Home server rather than a malicious entity).

The WLAN UE Cellgate client 204 replies with message 9, based on the result of its authentication procedure, which includes the response to the challenge if the Home AAA server 110 was authenticated correctly in the previous step. The WLAN UE CellGate client's response in message 9 is sent to the CellGate server 200 that forwards it to the local Visited AAA server 103 in message 10. The local Visited AAA server 103 forwards the Response to the Home AAA server 110 in message 11.

The Home AAA server 110 checks the Response to the challenge against the expected response and thus determines whether the WLAN UE has performed successful authentication or not. Upon successful authentication the Home AAA server 110 authorises the WLAN UE 100 for network access by informing the local Visited AAA server 103 of the successful result of the authentication. This information is included in the Access Reply message 12. In the same message the Home AAA server 110 includes the WLAN UE's profile and some of the keys required for the UE to secure communication with local nodes which is described in more detail later.

The authentication result information in the Access Reply message is forwarded from the local Visited AAA server 103 to the CellGate server 200 in message 13. The CellGate server then extracts the WLAN UE's profile and keys required to communicate with the WLAN UE in a secure manner and informs the WLAN UE of the authentication result in message 14. Message 14 does not include any keys or the WLAN UE's profile since that information is kept by the CellGate server 200.

Finally, if the authentication was successful, the CellGate server 200 sends a Command message (Message 15) to the WLAN AS 105. This message commands the WLAN AS 105 to allow the WLAN UE's traffic through it and instructs the WLAN AS 105 how to handle that traffic by providing it with the WLAN UE's profile related to data traffic. If the profile requires secure connection between the WLAN UE 100 and the WLAN AS 105 then the CellGate server also includes security information in Message 15, including the security keys and security type which is described in more detail later.

### WLAN UE - AAA server authentication

Mutual authentication between the WLAN UE and the Home AAA server is utilised in this embodiment of the present invention, such that the WLAN UE can determine that the Home AAA Server is not a malicious impersonating node and *vice versa* for the Home AAA Server with the WLAN UE.

A successful authentication allows the device to gain access to the visited WLAN Access Network. As a result of the authentication mechanism, a hierarchy of keys is generated. This is known to the end device (WLAN UE) and the Home AAA server.

Some of the keys can be used to secure communication between the WLAN UE and various application servers in the visited or home network. In addition, a subscriber's profile is downloaded from the Home AAA server to the Cellgate server in the visited WLAN Access network, through the local Visited AAA server.

A temporary identifier for the WLAN UE is generated by the Home AAA server to be used by network nodes in the Visited network when communicating with the WLAN UE, or when communicating information about such WLAN UE to other network nodes. The temporary identifier is sent from the Home AAA server to both the Cellgate server and to the WLAN UE. Communication with the Cellgate server is done through the local Visited AAA server. The temporary identifier is encrypted when sent to those entities. The temporary identifier and its encryption is needed to allow for user anonymity. The Home AAA server is configured with different spaces of numbers as follows:
- Permanent space: This space is dedicated to permanent identifiers that are used by devices and are tied to a shared secret between the WLAN UE and the Home AAA server.
- Temporary space: This space is dedicated to temporary identifiers that are used by the WLAN UE after authentication for the purpose of anonymity.

The Permanent identifier space can be further divided to indicate different categories of users. Such division need not be universal and can be done by the operator.

### Key Hierarchy

Every Home AAA server stores all Permanent identifiers and the shared secret (root key) associated with each identifier. The root key is known only to the Home AAA server 110 and the WLAN UE CellGate client 204. In cellular networks the SIM card, used by the WLAN UE CellGate client 204, and the HLR 209 contain the root key. When a WLAN UE is authenticated, the root key and the device identifier, in addition to a Pseudo Random Function, are used to generate a Master key. The Master key is then used to generate several other keys that are used to secure communication between the WLAN UE and other entities within the local network (e.g. WLAN AS or CellGate server).

Keys are distributed from the Home AAA server to the local Visited AAA server. Each application that requires mutual authentication between the WLAN UE and the application server can be provided with a key in an open manner without compromising the security of the key. An example for the generation of application-specific keys is shown below:
*Appkey* = hash(*MasterKey* | *Appname*)

The Appkey is the application-specific key. The Masterkey is the Master key generated by the Home AAA server for the purpose of generating application-specific keys. The Appname is a text string that includes the name of the application. For example the Appname for the Session Initiation Protocol could be "SIP".

When a device attempts to communicate with an application, it can generate the Appkey using the above formula (as an example) and attempt to authenticate the message using such key. The application server can then pull the same information from the local Visited (or Home) AAA server to authenticate the message.

### User Profiles

The Home AAA server is responsible for passing the authentication results to the local Visited AAA server. In addition, it passes the subscriber's (WLAN UE's) profile. The profile includes the type of subscription, in addition to several other attributes that are used to indicate the level of service required for each subscriber and the services that a subscriber is authorised to use. Parameters which may be included in the profile may include:
- Service level: This parameter indicates the service level agreement between the user and the home operator (e.g. Gold, Silver, Bronze) IP address: This parameter includes the IP address(es) allocated to the user. This may include one or more IP addresses using IPv4 and IPv6.
- Local services: This parameter indicates whether the subscriber is allowed to use local services within the visited WLAN Access network.
- Global services: This parameter is an indexed array that lists the Global services that the subscriber is allowed to use (i.e. Services known to the home and visited networks). Examples of such services are: Voice, Data, Video.
- Time: This parameter indicates the amount of time the user is allowed access to the network. This field is useful for operators that use utilisation time for billing purposes.
- Data throughput or quantity: This parameter indicates the amount of data or data rate that the user is allowed to send and receive while in the visited network.
- Reauth: This parameter states the frequency of reauthentication required to the Home AAA server.
- Tunnel end point and Traffic type: This is an optional field that indicates whether and what type of WLAN UE traffic should be tunnelled to the home operator's network (WLAN Gateway 202) and if so, it includes the transport IP and port addresses, tunnel type, security information and so on.
- Local Security: This is an optional field that indicates whether the WLAN UE requires a secure local connection to be established between itself and the WLAN AS. It also indicates the type of security connection required, where an example would be IPsec.

The WLAN UE user's profile is used to control the user access by the visited WLAN Access Network and to guarantee that the user will only have access to billable services (to the Home network).

### Data traffic Handling

If the WLAN UE 100 is successfully authenticated and authorised for network access, according to the procedures described previously, then the WLAN UE 100 is allowed to send and receive data traffic through the visited WLAN Access network 106. The CellGate Server 110 receives the authentication results from the Visited AAA server 103. If the authentication was successful the CellGate server 200 communicates with the WLAN AS 105 to instruct it open up the filters for the WLAN UE by providing the WLAN AS with information identifying the WLAN UE such as IP address and lower layer (MAC) address. This allows the WLAN UE 100 to utilize the visited WLAN Access Network 106. If the generic WLAN AP 209 in the WLAN Access Network supports access filtering control then the CellGate server 200 communicates this information also to the WLAN AP 209.

The WLAN AS 105 can then handle the WLAN UE's traffic in different ways. The same traffic handling function could be performed by the WLAN AP 209. For simplicity this functionality will be described using the WLAN AS as reference, but it should be noted that this part of the invention can be applied equally to the WLAN AP. Two different routing methods are used for WLAN AS handling of WLAN UE traffic in this embodiment of the invention:
- Direct Internet access: In this case the user's outgoing packets are forwarded between the WLAN UE and the WLAN AS (105 in Fig. 2). The WLAN AS forwards these packets towards the Internet or Corporate networks as per normal IP routing;
- Tunnel traffic to the WLAN Gateway: In this case the WLAN UE's outgoing packets are tunnelled to the WLAN Gateway 202, which provides a tunnel end point for each WLAN Access Network. All or a part of the WLAN UE's traffic is tunnelled to the tunnel end point. The typical location for the WLAN Gateway 202 is the Home Operator's network.

The WLAN AS 105 receives user policy information from the CellGate Server 200 following a successful authentication. This policy information contains routing policy that informs the WLAN AS 105 how it should route data to or from a specific WLAN UE. This policy may specify that a certain portion of the traffic, such as but not limited to the portion of traffic directed to the Home Mobile Services 206, should be routed towards the Wireless Gateway 203 in the home network through path 208 in Figure 2, while remaining traffic, if any, should be routed directly to Internet through path 207 in Figure 2. Alternatively the routing policy may specify that all traffic for a specific WLAN UE is to be routed to the Wireless Gateway 203 in the home network (path 208 in Figure 2) or all traffic is to be routed directly to Internet (path 207 in Figure 2).

The Direct Internet traffic routing case (path 207) involves either communication to the Internet or corporate networks. In the case of corporate networks the CellGate server 200 sends policies to the WLAN AS 105 that require a secure tunnel to be used for the WLAN UE's traffic between WLAN AS 105 and the corporate network in 108. This may be any type of secure IP tunnel including IPsec (IP security) and L2TP (Layer 2 Tunnelling Protocol) as described earlier.

Instead if all or a certain portion of the WLAN UE's traffic is to be tunnelled to the Wireless Gateway 203 in the home network (path 208), the Home AAA server 110 communicates the traffic description and tunnel information to the Cellgate server 200, via the local visited AAA server 103, as part of the WLAN UE policy information described in section 0. The WLAN AS 105 configures one IP tunnel per WLAN Gateway 202 in each collaborating cellular operator's home network.

The WLAN Gateway 202 that acts as the tunnel endpoint in the home network performs filtering and packet counting functions according to the security and charging policies of the home operator.

The WLAN UE CellGate client 204 is able to obtain usage and current account status information either from CellGate server 200, that would in turn obtain this information from the WLAN Gateway 202, or from the WLAN Gateway 202 directly.

It will be appreciated that many modifications may be made to the embodiments hereinbefore described. Although embodiments of the invention have been described with reference to WLAN, other wireless technologies which support the Internet Protocol may be used, such as OFDM.

## Claims

1. A method of establishing communication between a mobile device (100) and a network (108, 206) through an access network (106), said mobile device (100) bering subscribed to a Home Cellular Operator, the access network including an access point (209) for connecting the mobile device to the access network, an access server (105) for providing access to said network, and a gateway (200) for authenticating the mobile device and for instructing the access server to allow data traffic between the mobile device (100) and the network, the method comprising:
transmitting an access request from the mobile device (100) to the gateway (200), the access request Including data for identifying the mobile device; transmitting an authentication challenge from the gateway (200) to the mobile device (100); transmitting a response to the authentication challenge from the mobile device (100) to the gateway (200):
determining whether the mobile device (100) is authorised and, if the mobile device is authorised:
transmitting an indication of successful authentication from the gateway (200) to the mobile device (100); and
transmitting a mobile device profile including the type of subscription and security information including a key from the gateway (200) to the access server (105).

2. A method according to claim 1, further comprising, at the mobile device (100):
encrypting data using the key; and
transmitting encrypted data to the access server (105).

3. A method according to claim 1 or 2, further comprising, at the access server (105):
receiving data from the network (108);
identifying that the data is intended for said mobile device (100) using the mobile device profile; and
forwarding said data to the mobile device.

4. A method according to any preceding claim, further comprising:
transmitting a request to authenticate the mobile device (100) from the gateway (200) to a local authentication server (103) in the access network (106), the request comprising information for identifying the mobile device and a home network;
transmitting the request to authenticate the mobile device from the local authentication server to a home authentication server (110);
transmitting a request for security information for authenticating the mobile device from the home authentication server via a home location register proxy to a home location register;
receiving, at the home authentication server, security information for authenticating the mobile device;
deriving, at the home authentication server, the authentication challenge from the security information;
transmitting the authentication challenge from the home authentication server to the local authentication server; and
transmitting the authentication challenge from the local authentication server to the gateway.

5. A method according to claim 4, wherein the request further comprises information for identifying the gateway (200).

6. A method according to any preceding claim, further comprising
transmitting the response to the authentication challenge from the gateway (200) to a local authentication server (103) in the access network (106);
transmitting the response to the authentication challenge from the local authentication server to a home authentication server (110);
comparing, at the home authentication server, the response with security information for authenticating the mobile device;
determining, at the home authentication server, whether the response matches the security information; and
if the response matches the security information, transmitting a success message indicating successful authentication, the security information and the mobile device profile, or, if the response does not match the security information; transmitting a failure message indicating unsuccessful authentication, from the home authentication server to the local authentication server; and
transmitting the success message, the security information and the mobile device profile, or the failure message, from the local authentication server to the gateway.

7. A method according to any preceding claim, further comprising:
performing an Internet Protocol security (IPsec) Internet Key Exchange (IKE) transaction between mobile device (100) and access server (105) for establishing secure communication.

8. A method according to any preceding claim, further comprising:
obtaining the response to the authentication challenge, at the mobile device (100), using a Subscriber Identity Module (SIM) card or 3G Universal Subscriber Identity Module (USIM) card.

9. A method according to any preceding claim, further comprising:
using Extensible Authentication Protocol for GSM Subscriber Identification Modules (EAP-SIM) and/or the Extensible Authentication Protocol for 3^{rd} Generation Authentication and Key Agreement (EAP-AKA) to transport authentication information between the mobile device (100) and a home authentication server (110).

10. A method according to any preceding claim, further comprising:
generating, at a home authentication server and at the mobile device, at least one master key from a root key for including in the security information for securing communication between the mobile device and the access server and, for the or each master key, an optional lifetime for the master key and an optional algorithm.

11. A method according to claim 10, further comprising:
generating, at the home authentication server, a key for securing communication between the access server (105) and an access network gateway (202) for connecting the access server to the network.

12. A method according to claim 11, further comprising:
transmitting the key for securing communication between the access server (105) and the access network gateway (202) to the access network gateway.

13. A method according to any one of claims 10 to 12, further comprising:
generating a key for securing communication between the access server (105) and an application server.

14. A method according to any one of claims 10 to 13, further comprising:
generating an application-specific key.

15. A method according to claim 14, further comprising:
transmitting the application-specific key from the home authentication server to an application server.

16. A method according to claim 14 or 15, wherein the application-specific key is used to establish a secure communication between the mobile device and the application server.

17. A method according to claim 15 or 16, wherein the application server comprises a Session Initiation Protocol (SIP) server.

18. A method according to claim 15 or 16, comprising:
generating the application-specific key at a home authentication server and
transmitting the application-specific key to the application server, optionally via a local authentication server (103).

19. A method according to any preceding claim, comprising:
establishing secure communication between the mobile device (100) and the access server (105), wireless gateway (203), and/or to the network (108) using the security information.

20. A method according to claim 19, comprising:
establishing secure communication using Internet Protocol security (IPsec) Internet Key Exchange (IKE) mechanism.

21. A method according to any preceding claim, comprising:
the access server (105) configuring, using the mobile terminal profile, a secure IP tunnel between the access server (105) and an access network gateway (202) for connecting the access server to the network.

22. A method according to claim 21, comprising:
implementing the secure IP tunnel using Internet Protocol security (IPsec) and/or Layer 2 Tunnelling Protocol (L2TP).

23. A method according to any preceding claim, further comprising:
generating an application-specific security key for establishing secure communication by performing a hash function on the master key and an application name string.

24. A method according to any preceding claim, comprising:
if the mobile device (100) is authorised:
transmitting, from the gateway (200) to the access point (209) or access server (105), information for identifying the mobile device (100) and an instruction to provide service to the mobile device.

25. A method according to claim 24, comprising:
transmitting, from the gateway (200) to the access point (209) or access server (105), security information for establishing secure communication between the mobile device (100) and the access point or access server.

26. A method according to any preceding claim, wherein the mobile device profile comprises:
optionally, service level information for indicating a service level;
optionally, network address information for the mobile device (100);
optionally, local service information for indicating whether the mobile device (100) is allowed to use local services within the access network (106);
optionally, global service information for indicating services which the mobile device (100) is allowed to use;
optionally, time information for indicating the amount of time the mobile device (100) is allowed access to the access network (106);
optionally, data throughput or quantity information for indicating data rate or data amount the mobile device (100) is allowed to send and receive while in the access network (106);
optionally, re-authorization frequency information for indicating frequency with which the mobile device should re-authenticate with a home authentication server (110);
optionally, tunnel end point and traffic type information for indicating, for different traffic types, whether data packets transmitted between the mobile device and the network are to be tunnelled and, if so, indicating at least IP and port addresses, tunnel type and security information; optionally, local security information for indicating whether mobile device requires a secure local connection to be established between itself and the access server.

27. A method according to any preceding claim, comprising:
the access server (105) blocking the mobile device (100) from using services that it is not allowed to access and providing the mobile device with a subscribed quality of service in dependence upon the mobile device profile information.

28. A method according to any preceding claim, comprising,
the access server (105) determining how to route traffic and whether it must establish a secure IP tunnel to the access network gateway (202) for connecting the access server to the network in dependence upon tunnel endpoint and traffic type information contained in the mobile device profile.

29. A method according to claim 28, comprising:
the access server (105) establishing a secure IP tunnel to each access network gateway in respective home networks.

30. A method according to any preceding claim comprising
identifying the mobile device (100) using an international mobile subscriber identity (IMSI);
identifying the mobile device using a mobile subscriber integrated services digital network (MSISDN) number;
identifying the mobile device using a network address identifier (NAI); and/or
identifying the mobile device using an IPv4 and/or IPv6 address and/or Medium Access Control (MAC) address.

31. A method according to any preceding claim comprising:
identifying a home network of the mobile device (100) using an international mobile subscriber identity (IMSI), a mobile subscriber integrated services digital network (MSISDN) number or an network address identifier; and
identifying a network address of the home authentication server using the home network.

32. A method according to any preceding claim, comprising:
the access server (105), determining whether the mobile device profile specifies that data is to be transmitted via a tunnel to a corporate network (108) or an access network gateway (202),
the access server (105) assigning an IP address to the mobile device (100) from an address pool belonging to the corporate network or a home mobile network.

33. A method according to any preceding claim, wherein the security information includes a security key, a lifetime and an mobile device identifier.

34. An access network (106) comprising:
an access point (209) for connecting a mobile device (100);
an access server (105) for providing access to another network (108);
an authentication proxy (103) for obtaining authentication information from a home authenticcation server; and
a gateway (200) configured to authenticate the mobile device (100) to Instruct the access server (105) to allow data traffic between the mobile device and the network and to transmit a mobile device profile and security information including a key to the access server (105).

35. A method according to claims 1-33 or network according to claim 34, wherein the gateway (200) and access point (209) are unitary.

36. A method according to claims 1-33 or network according to claim 34, wherein the access server (105) and access point (209) are unitary.

37. A method according to claims 1-33 or network according to claim 34, wherein a local authentication server (103) and wireless gateway (203) are unitary.

38. A method according to claims 1-33 or network according to claim 34, wherein the access server (105) and a access network gateway (203) between the access server and the network (108, 296) are unitary.

39. A method according to claims 1-33 or network according to claim 34, wherein:
the access network is a wireless network;
the mobile device is a wireless user equipment;
the access point is a wireless access point; and
the access server is a wireless access server and
wherein the access network, the mobile device, the access point and access server support Internet Protocol.

40. A method or network according to claim 39, wherein:
the access network (106) is a wireless local area network (WLAN);
the mobile device (100) is a WLAN user equipment;

41. A method or network according to any claim 39, wherein:
the access network is a orthogonal frequency division multiplexing (OFDM) network;
the mobile device is an OFDM user equipment;
the access point is an OFDM access point; and
the access server is an OFDM access server.

42. A gateway (200) for use in an access network (106) including an access point (209), an access server (105) and an authentication proxy (103), the gateway configured to exchange authentication information with a home authentication server (203) via the local authentication proxy, to authenticate the mobile device (100) and to instruct the access server (105) to allow data traffic to and from the mobile device (100) and to transmit a mobile device profile and security information including a key to the access server (105).
the access point (209) is a WLAN access point; and
the access server (105) is a WLAN access server.

43. A gateway according to claim 42, configured to transmit a challenge according to extensible authentication protocol (EAP).

44. A gateway according to claim 42 or 43, configured to instruct the access server to how to route data traffic to and from the mobile device.

## Patentansprüche

1. Verfahren zum Aufbau einer Verbindung zwischen einer mobilen Vorrichtung (100) und einem Netzwerk (108, 206) durch ein Zugangsnetzwerk (106), wobei die mobile Vorrichtung (100) über einen Heim-Handybetreiber subskribiert wird, wobei das Zugangsnetzwerk einen Zugangspunkt (209) zum Verbinden der mobilen Vorrichtung mit dem Zugangsnetzwerk, einen Zugangsserver (105) zum Vorsehen des Zugangs zum Netzwerk, und ein Gateway (200) zum Authentisieren der mobilen Vorrichtung und zum Instruieren des Zugangsservers umfasst, um den Datenverkehr zwischen der mobilen Vorrichtung (100) und dem Netzwerk zu erlauben, wobei das Verfahren Folgendes aufweist:
- Übertragen einer Zugangsanfrage von der mobilen Vorrichtung (100) zum Gateway (200), wobei die Zugangsanfrage Daten zur Identifizierung der mobilen Vorrichtung umfasst;
- Übertragen einer Authentisierungsaufforderung vom Gateway (200) zur mobilen Vorrichtung (100);
- Übertragen einer Antwort auf die Authentisierungsaufforderung von der mobilen Vorrichtung (100) zum Gateway (200);
- Bestimmen, ob die mobile Vorrichtung (100) autorisiert ist und, wenn die mobile Vorrichtung autorisiert ist:
- Übertragen einer Meldung der erfolgreichen Authentisierung vom Gateway (200) zur mobilen Vorrichtung (100); und
- Übertragen eines mobilen Vorrichtungsprofils inklusive der Art der Subskription und der Sicherheitsinformation mit einem Key vom Gateway (200) zum Zugangsserver (105).

2. Verfahren gemäß Anspruch 1, das bei der mobilen Vorrichtung (100) ferner Folgendes aufweist:
- Verschlüsseln der Daten unter Verwendung des Keys; und
- Übertragung der verschlüsselten Daten zum Zugangsserver (105).

3. Verfahren gemäß Anspruch 1 oder 2, das beim Zugangsserver (105) ferner Folgendes aufweist:
- Empfangen der Daten vom Netzwerk (108);
- Identifizieren, dass die Daten für die mobile Vorrichtung (100) unter Verwendung des mobilen Vorrichtungsprofils vorgesehen sind; und
- Weiterleiten der Daten an die mobile Vorrichtung.

4. Verfahren gemäß einem vorhergehenden Anspruch, das ferner Folgendes aufweist:
- Übertragen einer Anfrage zur Authentisierung der mobilen Vorrichtung (100) vom Gateway (200) zu einem lokalen Authentisierungsserver (103) im Zugangsnetzwerk (106), wobei die Anfrage Informationen zur Identifizierung der mobilen Vorrichtung und eines Heimnetzwerkes umfasst;
- Übertragen der Anfrage zur Authentisierung der mobilen Vorrichtung vom lokalen Authentisierungsserver zum Heim-Authentisierungsserver (110);
- Übertragen einer Anfrage zur Sicherheitsinformation zur Authentisierung der mobilen Vorrichtung vom Heim-Authentisierungsserver über einen Heim-Aufenthaltsregister-Proxy zum Heim-Aufenthaltsregister;
- Empfangen der Sicherheitsinformation zur Authentisierung der mobilen Vorrichtung beim Heim-Authentisierungsserver;
- Herleiten der Authentisierungsaufforderung von der Sicherheitsinformation beim Heim-Authentisierungsserver;
- Übertragen der Authentisierungsaufforderung vom Heim-Authentisierungsserver zum lokalen Authentisierungsserver; und
- Übertragen der Authentisierungsaufforderung vom lokalen Authentisierungsserver zum Gateway.

5. Verfahren gemäß Anspruch 4, wobei die Anfrage ferner Informationen zum Identifizieren des Gateways (200) umfasst.

6. Verfahren gemäß einem vorhergehenden Anspruch, das ferner Folgendes aufweist:
- Übertragen der Antwort auf die Authentisierungsaufforderung vom Gateway (200) zu einem lokalen Authentisierungsserver (103) im Zugangsnetzwerk (106);
- Übertragen der Antwort auf die Authentisierungsaufforderung vom lokalen Authentisierungsserver zum Heim-Authentisierungsserver (110);
- Vergleichen, beim Heim-Authentisierungsserver, der Antwort mit der Sicherheitsinformation zum Authentisieren der mobilen Vorrichtung;
- Bestimmen, beim Heim-Authentisierungsserver, ob die Antwort mit der Sicherheitsinformation übereinstimmt; und
- wenn die Antwort mit der Sicherheitsinformation übereinstimmt, Übertragen einer erfolgreichen Nachricht, die die erfolgreiche Authentisierung, die Sicherheitsinformation und das mobile Vorrichtungsprofil meldet, oder, wenn die Antwort nicht mit der Sicherheitsinformation übereinstimmt, Übertragen einer Fehlermeldung, die die nicht erfolgreiche Authentisierung vom Heim-Authentisierungsserver zum lokalen Authentisierungsserver meldet; und
- Übertragen der erfolgreichen Meldung, Sicherheitsinformation und mobilen Vorrichtungsprofil, oder der Fehlermeldung vom lokalen Authentisierungsserver zum Gateway.

7. Verfahren gemäß einem vorhergehenden Anspruch, das ferner Folgendes aufweist:
- Ausführen einer Internet Protocol Security (IPsec) Internet Key Exchange (I-KE) Transaktion zwischen der mobilen Vorrichtung (100) und dem Zugangsserver (105) zum Aufbau einer sicheren Verbindung.

8. Verfahren gemäß einem vorhergehenden Anspruch, das ferner Folgendes aufweist:
- Erhalt der Antwort auf die Authentisierungsaufforderung bei der mobilen Vorrichtung (100), die eine Subscriber Identity Module (SIM) Karte oder 3G Universal Subscriber Identity Module (USIM) Karte verwendet.

9. Verfahren gemäß einem vorhergehenden Anspruch, das ferner Folgendes aufweist:
- Verwenden des Extensible Authentication Protocol für GSM Subscriber Identification Module (EAP-SIM) und/oder des Extensible Authentication Protokol für 3. Generation-Authentisierung und Key Agreement (EAP-AKA), um die Authentisierungsinformation zwischen der mobilen Vorrichtung (100) und einem Heim-Authentisierungsserver (110) zu transportieren.

10. Verfahren gemäß einem vorhergehenden Anspruch, das ferner Folgendes aufweist:
- Erzeugen, beim Heim-Authentisierungsserver und bei der mobilen Vorrichtung, von mindestens einem Master Key von einem Root Key zum Aufweisen in der Sicherheitsinformation, um die Verbindung zwischen der mobilen Vorrichtung und dem Zugangsserver sicherzustellen, und für den oder jeden Master Key eine optionale Lebensdauer für den Master Key und einen optionalen Algorithmus sicherzustellen.

11. Verfahren gemäß Anspruch 10, das ferner Folgendes aufweist:
- Erzeugen eines Keys beim Heim-Authentisierungsserver, um die Verbindung zwischen dem Zugangsserver (105) und einem Zugangsnetzwerk-Gateway (202) sicherzustellen, um den Zugangsserver mit dem Netzwerk zu verbinden.

12. Verfahren gemäß Anspruch 11, das ferner Folgendes aufweist:
- Übertragen des Keys, um die Verbindung zwischen dem Zugangsserver (105) und dem Zugangsnetzwerk-Gateway (202) zum Zugangsnetzwerk-Gateway sicherzustellen.

13. Verfahren gemäß einem der vorhergehenden Ansprüche 10 bis 12, das Folgendes aufweist:
- Erzeugen eines Keys, um die Verbindung zwischen dem Zugangsserver (105) und einem Anwendungsserver sicherzustellen.

14. Verfahren gemäß einem der Ansprüche 10 bis 13, das ferner Folgendes aufweist:
- Erzeugen eines anwendungsspezifischen Keys.

15. Verfahren gemäß Anspruch 14, das ferner Folgendes aufweist:
- Übertragen des anwendungsspezifischen Keys vom Heim-Authentisierungsserver zum Anwendungsserver.

16. Verfahren gemäß Anspruch 14 oder 15, wobei der anwendungsspezifische Key verwendet wird, um eine sichere Verbindung zwischen der mobilen Vorrichtung und dem Anwendungsserver aufzubauen.

17. Verfahren gemäß Anspruch 15 oder 16, wobei der Anwendungsserver einen Session Initiation Protocol (SIP)-Server aufweist.

18. Verfahren gemäß Anspruch 15 oder 16, das Folgendes aufweist:
- Erzeugen des anwendungsspezifischen Keys beim Heim-Authentisierungsserver und Übertragen des anwendungsspezifischen Keys zum Anwendungsserver, optional über einen lokalen Authentisierungsserver (103).

19. Verfahren gemäß einem vorhergehenden Anspruch, das Folgendes aufweist:
- Aufbauen der sicheren Verbindung zwischen der mobilen Vorrichtung (100) und dem Zugangsserver (105), drahtlosen Gateway (203), und/oder Netzwerk (108) unter Verwendung der Sicherheitsinformation.

20. Verfahren gemäß Anspruch 19, das Folgendes aufweist:
- Aufbauen der sicheren Verbindung unter Verwendung des Internet Protocol Security (IPsec) Internet Key Exchange (IKE)-Mechanismus.

21. Verfahren gemäß einem vorhergehenden Anspruch, das Folgendes aufweist:
- Konfigurieren eines sicheren IP-Tunnels durch den Zugangsserver (105) unter Verwendung des mobilen Anschlussprofils zwischen dem Zugangsserver (105) und einem Zugangsnetzwerk-Gateway (202) zum Verbinden des Zugangsservers mit dem Netzwerk.

22. Verfahren gemäß Anspruch 21, das Folgendes aufweist:
- Implementieren des sicheren IP-Tunnels unter Verwendung der Internet Protocol Security (IPsec) und/oder Layer 2 Tunneling Protocol (L2TP).

23. Verfahren gemäß einem vorhergehenden Anspruch, das ferner Folgendes aufweist:
- Erzeugen eines anwendungsspezifischen Sicherheitskeys zum Aufbauen der sicheren Verbindung durch Ausführen einer Hash Function auf dem Master Key und einer Anwendungs-Namensfolge.

24. Verfahren gemäß einem vorhergehenden Anspruch, das Folgendes umfasst:
- wenn die mobile Vorrichtung (100) autorisiert ist:
- Übertragen einer Information vom Gateway (200) zum Zugangspunkt (209) oder Zugangsserver (105), um die mobile Vorrichtung (100) zu identifizieren, und einer Instruktion, um den Service für die mobile Vorrichtung vorzusehen.

25. Verfahren gemäß Anspruch 24, das Folgendes aufweist:
- Übertragen der Sicherheitsinformation vom Gateway (200) zum Zugangspunkt (209) oder Zugangsserver (105) zum Aufbauen der sicheren Verbindung zwischen der mobilen Vorrichtung (100) und dem Zugangspunkt oder Zugangsserver.

26. Verfahren gemäß einem vorhergehenden Anspruch, wobei das mobile Vorrichtungsprofil Folgendes aufweist:
- optional, Serviceniveauinformation zum Melden eines Serviceniveaus;
- optional, Netzwerkadressinformation für die mobile Vorrichtung (100);
- optional, lokale Serviceinformation zum Melden, ob es der mobilen Vorrichtung (100) erlaubt ist, um die lokalen Services innerhalb des Zugangsnetzwerks (106) zu nutzen;
- optional, globale Serviceinformation zum Melden der Services, die die mobile Vorrichtung (100) benutzen darf;
- optional, Zeitinformation zum Melden der Zeitdauer, während der die mobile Vorrichtung (100) Zugang zum Zugangsnetzwerk (106) haben darf;
- optional, Datendurchsatz oder Mengeninformation zum Melden der Datenrate oder Datenmenge, welche der mobilen Vorrichtung (100) das Senden und Empfangen erlaubt, während sie sich im Zugangsnetzwerk (106) befindet;
- optional, Neuautorisierung der Frequenzinformation zum Melden der Frequenz, mit der sich die mobile Vorrichtung mit einem Home-Authentisierungsserver (110) neu authentisieren soll;
- optional, Tunnel-Endpunkt und Verkehrstypinformation für verschiedene Verkehrsarten zum Melden, ob Datenpakete, die zwischen der mobilen Vorrichtung und dem Netzwerk übertragen werden, getunnelt werden sollen, und wenn das so ist, Melden von zumindest der IP- und Anschlussadressen, Tunnelart und Sicherheitsinformation;
- optional, lokale Sicherheitsinformation zum Melden, ob die mobile Vorrichtung eine sichere lokale Verbindung erfordert, die zwischen ihr selbst und dem Zugangsserver aufzubauen ist.

27. Verfahren gemäß einem vorhergehenden Anspruch, das Folgendes aufweist:
- Sperren der mobilen Vorrichtung (100) von der Nutzung der Services durch den Zugangsserver (105), so dass ihr kein Zugang erlaubt ist, und Versehen der mobilen Vorrichtung mit einer subskribierten Servicequalität in Abhängigkeit von der mobilen Vorrichtungsprofilinformation.

28. Verfahren gemäß einem vorhergehenden Anspruch, das Folgendes aufweist:
- Bestimmen durch den Zugangsserver (105), wie der Verkehr zu steuern ist, und ob ein sicherer IP-Tunnel zum Zugangsnetzwerk-Gateway (202) zum Verbinden des Zugangsservers mit dem Netzwerk in Abhängigkeit vom Tunnelendpunkt und der Verkehrsartinformation, die das mobile Vorrichtungsprofil enthält, aufgebaut werden muss.

29. Verfahren gemäß Anspruch 28, das Folgendes aufweist:
- Aufbauen eines sicheren IP-Tunnel zu jedem Zugangsnetzwerk-Gateway in den jeweiligen Heim-Netzwerken durch den Zugangsserver (105).

30. Verfahren gemäß einem vorhergehenden Anspruch, das Folgendes aufweist:
- Identifizieren der mobilen Vorrichtung (100) unter Verwendung einer International Mobile Subscriber Identity (IMSI);
- Identifizieren der mobilen Vorrichtung unter Verwendung einer mobilen Subscriber Integrated Services Digital Network (MSISDN)-Nummer;
- Identifizieren der mobilen Vorrichtung unter Verwendung eines Network Address Identifier (NAI); und/oder
- Identifizieren der mobilen Vorrichtung unter Verwendung einer IPv4- und/oder IPv6-Adresse und/oder Medium Access Control (MAC)-Adresse.

31. Verfahren gemäß einem vorhergehenden Anspruch, das Folgendes aufweist:
- Identifizieren eines Heim-Netzwerkes der mobilen Vorrichtung (100) unter Verwendung einer International Mobile Subscriber Identity (IMSI), einer mobilen Subscriber Integrated Services Digital Network (MSISDN)-Nummer oder eines Netzwerkadressidentifizierers; und
Identifizieren einer Netzwerkadresse des Heim-Authentisierungsservers unter Verwendung des Heim-Netzwerkes.

32. Verfahren gemäß einem vorhergehenden Anspruch, das Folgendes aufweist:
- Bestimmen durch den Zugangsserver (105), ob das mobile Vorrichtungsprofil spezifiziert, dass die Daten über einen Tunnel zu einem Unternehmensnetz oder einem Zugangsnetzwerk-Gateway (202) übertragen werden sollen,
- wobei der Zugangsserver (105) eine IP-Adresse der mobilen Vorrichtung (100) von einem Adressenpool zuweist, der zum Unternehmensnetzwerk oder einem mobilen Heim-Netzwerk gehört.

33. Verfahren gemäß einem vorhergehenden Anspruch, wobei die Sicherheitsinformation einen Sicherheitskey, eine Lebensdauer und einen mobilen Vorrichtungsidentifizierer umfasst.

34. Zugangsnetzwerk (106), das Folgendes aufweist:
- einen Zugangspunkt (209) zum Verbinden einer mobilen Vorrichtung (100);
- einen Zugangsserver (105) zum Vorsehen des Zugangs zu einem weiteren Netzwerk (108);
- einen Authentisierungs-Proxy (103) zum Erhalten der Authentisierungsinformation von einem Heim-Authentisierungsserver; und
- ein Gateway (200), um die mobile Vorrichtung (100) zu authentisieren, um den Zugangsserver (105) zu instruieren, um den Datenverkehr zwischen der mobilen Vorrichtung und dem Netzwerk zu erlauben und ein mobiles Vorrichtungsprofil und die Sicherheitsinformation mit einem Key zum Zugangsserver (105) zu übertragen.

35. Verfahren gemäß einem der Ansprüche 1 bis 33 oder Netzwerk gemäß Anspruch 34, wobei das Gateway (200) und der Zugangspunkt (209) einheitlich sind.

36. Verfahren gemäß einem der Ansprüche 1 bis 33 oder Netzwerk gemäß Anspruch 34, wobei der Zugangsserver (105) und der Zugangspunkt (209) einheitlich sind.

37. Verfahren gemäß einem der Ansprüche 1 bis 33 oder Netzwerk gemäß Anspruch 34, wobei ein lokaler Authentisierungsserver (103) und das drahtlose Gateway (203) einheitlich sind.

38. Verfahren gemäß einem der Ansprüche 1 bis 33 oder Netzwerk gemäß Anspruch 34, wobei der Zugangsserver (105) und ein Zugangsnetzwerks-Gateway (203) zwischen dem Zugangsserver und dem Netzwerk (108, 296) einheitlich sind.

39. Verfahren gemäß einem der Ansprüche 1 bis 33 oder Netzwerk gemäß Anspruch 34, wobei:
- der Zugangsnetzwerk ein drahtloses Netzwerk ist;
- die mobile Vorrichtung eine drahtlose Anwenderausrüstung ist;
- der Zugangspunkt ein drahtloser Zugangspunkt ist; und
- der Zugangsserver ein drahtloser Zugangsserver ist und
- wobei der Zugangsnetzwerk, mobile Vorrichtung, Zugangspunkt und Zugangsserver das Internet Protocol unterstützen.

40. Verfahren oder Netzwerk gemäß Anspruch 39, wobei:
- der Zugangsnetzwerk (106) ein drahtloses Local Area Network (WLAN) ist;
- die mobile Vorrichtung (100) eine WLAN-Anwenderausrüstung ist;
- der Zugangspunkt (209) ein WLAN-Zugangspunkt ist; und
- der Zugangsserver (105) ein WLAN-Zugangsserver ist.

41. Verfahren oder Netzwerk gemäß Anspruch 39, wobei:
- der Zugangsnetzwerk ein Orthogonal Frequency Division Multiplexing (UFDM)-Netzwerk ist;
- die mobile Vorrichtung eine OFDM-Anwenderausrüstung ist;
- der Zugangspunkt ein OFMD-Zugangspunkt ist; und
- der Zugangsserver ein OFDM-Zugangsserver ist.

42. Gateway (200) zur Verwendung in einem Zugangsnetzwerk (106) mit einem Zugangspunkt (209), Zugangsserver (105) und Authentisierungs-Proxy (103), wobei das Gateway die Authentisierungsinformation mit einem Heim-Authentisierungsserver (203) über den lokalen Authentisierungs-Proxy austauscht, um die mobile Vorrichtung (100) zu authentisieren und den Zugangsserver (105) zu instruieren, den Datenverkehr zu und von der mobilen Vorrichtung (100) zu erlauben und ein mobiles Vorrichtungsprofil und die Sicherheitsinformation mit einem Key zum Zugangsserver (105) zu übertragen.

43. Gateway gemäß Anspruch 42, um eine Aufforderung gemäß des Extensible Authentication Protocols (EAP) zu übertragen.

44. Gateway gemäß Anspruch 42 oder 43, um den Zugangsserver zu instruieren, wie der Datenverkehr zu und von der mobilen Vorrichtung zu steuern ist.

## Revendications

1. Procédé d'établissement d'une communication entre un dispositif mobile (100) et un réseau (108, 206) via un réseau d'accès (106), ledit dispositif mobile (100) étant abonné à un Opérateur Cellulaire de Rattachement, le réseau d'accès comprenant un point d'accès (209) pour la connexion du dispositif mobile au réseau d'accès, un serveur d'accès (105) destiné à fournir un accès audit réseau, et une passerelle (200) destinée à authentifier le dispositif mobile et à donner au serveur d'accès l'instruction de permettre un trafic de données entre le dispositif mobile (100) et le réseau, le procédé comprenant les étapes selon lesquelles :
le dispositif mobile (100) envoie une demande d'accès à la passerelle (200), la demande d'accès incluant des données permettant l'identification du dispositif mobile ;
la passerelle (200) envoie un défi d'authentification au dispositif mobile (100) ;
le dispositif mobile (100) envoie une réponse au défi d'authentification à la passerelle (200) ;
il est déterminé si le dispositif mobile (100) est autorisé et, si le dispositif mobile est autorisé :
la passerelle (200) envoie une indication de réussite d'authentification au dispositif mobile (100) ; et
la passerelle (200) envoie au serveur d'accès (105) un profil de dispositif mobile incluant le type d'abonnement et des informations de sécurité incluant une clé.

2. Procédé selon la revendication 1, comprenant en outre les étapes selon lesquelles le dispositif mobile (100) :
chiffre les données à l'aide de la clé ; et
envoie les données chiffrées au serveur d'accès (105).

3. Procédé selon la revendication 1 ou 2, comprenant en outre les étapes selon lesquelles le serveur d'accès (105) :
reçoit des données en provenance du réseau (108) ;
identifie, à l'aide du profil de dispositif mobile, que les données sont destinées audit dispositif mobile (100) ; et
transmet lesdites données au dispositif mobile.

4. Procédé selon l'une quelconque des revendications précédentes, comprenant en outre les étapes selon lesquelles :
la passerelle (200) envoie une demande d'authentification du dispositif mobile (100) à un serveur d'authentification local (103) situé sur le réseau d'accès (106), la demande comprenant des informations permettant l'identification du dispositif mobile et d'un réseau nominal ;
le serveur d'authentification local envoie la demande d'authentification du dispositif mobile à un serveur d'authentification nominal (110) ;
le serveur d'authentification nominal envoie à un registre de localisation nominal, via un mandataire de registre de localisation nominal, une demande d'informations de sécurité pour l'authentification du dispositif mobile ;
le serveur d'authentification nominal reçoit des informations de sécurité pour l'authentification du dispositif mobile ;
le serveur d'authentification nominal déduit le défi d'authentification à partir des informations de sécurité ;
le serveur d'authentification nominal envoie le défi d'authentification au serveur d'authentification local ; et
le serveur d'authentification local envoie le défi d'authentification à la passerelle.

5. Procédé selon la revendication 4, dans lequel la demande comprend en outre des informations permettant l'identification de la passerelle (200).

6. Procédé selon l'une quelconque des revendications précédentes, comprenant en outre les étapes selon lesquelles :
la passerelle (200) envoie la réponse au défi d'authentification à un serveur d'authentification local (103) situé sur le réseau d'accès (106) ;
le serveur d'authentification local envoie la réponse au défi d'authentification à un serveur d'authentification nominal (110) ;
le serveur d'authentification nominal compare la réponse à des informations de sécurité pour l'authentification du dispositif mobile ;
le serveur d'authentification nominal détermine si la réponse correspond aux informations de sécurité ; et
si la réponse correspond aux informations de sécurité, le serveur d'authentification nominal envoie au serveur d'authentification local un message de succès indiquant une réussite d'authentification, les informations de sécurité et le profil du dispositif mobile, et si la réponse ne correspond pas aux informations de sécurité, il lui envoie un message d'échec indiquant un échec d'authentification ; et
le serveur d'authentification local envoie à la passerelle le message de succès, les informations de sécurité et le profil du dispositif mobile.

7. Procédé selon l'une quelconque des revendications précédentes, comprenant en outre l'étape selon laquelle :
le dispositif mobile (100) et le serveur d'accès (105) exécutent entre eux une transaction Sécurité du Protocole Internet (IPsec)/Echange de Clé Internet (IKE) pour établir une communication sécurisée.

8. Procédé selon l'une quelconque des revendications précédentes, comprenant en outre l'étape selon laquelle :
le dispositif mobile (100) obtient la réponse au défi d'authentification à l'aide d'une carte Module d'Identité d'Abonné (SIM) ou d'une carte Module d'Identité Universelle d'Abonné 3G (USIM).

9. Procédé selon l'une quelconque des revendications précédentes, comprenant en outre l'étape selon laquelle :
le Protocole d'Authentification Extensible pour Modules d'Identification d'Abonné GSM (EAP-SIM) et/ou le Protocole d'Authentification Extensible pour Authentification et Accord de Clé de 3ème Génération (EAP-AKA) sont utilisés pour le transport d'informations d'authentification entre le dispositif mobile (100) et un serveur d'authentification nominal (110).

10. Procédé selon l'une quelconque des revendications précédentes, comprenant en outre l'étape selon laquelle :
un serveur d'authentification nominal et le dispositif mobile génèrent au moins une clé maîtresse à partir d'une clé racine, pour l'inclure dans les informations de sécurité afin de sécuriser la communication entre le dispositif mobile et le serveur d'accès et, pour la ou chaque clé maîtresse, une durée de vie facultative pour la clé maîtresse et un algorithme facultatif.

11. Procédé selon la revendication 10, comprenant en outre l'étape selon laquelle :
le serveur d'authentification nominal génère une clé permettant de sécuriser la communication entre le serveur d'accès (105) et une passeresse de réseau d'accès (202) servant à connecter le serveur d'accès au réseau.

12. Procédé selon la revendication 11, comprenant en outre l'étape selon laquelle :
la clé de sécurisation de la communication entre le serveur d'accès (105) et une passeresse de réseau d'accès (202) est envoyée à la passerelle de réseau d'accès.

13. Procédé selon l'une quelconque des revendications 10 à 12, comprenant en outre l'étape selon laquelle :
une clé de sécurisation de la communication entre le serveur d'accès (105) et un serveur d'application est générée.

14. Procédé selon l'une quelconque des revendications 10 à 13, comprenant l'étape selon laquelle :
une clé spécifique d'application est générée.

15. Procédé selon la revendication 14, comprenant en outre l'étape selon laquelle :
le serveur d'authentification nominal envoie la clé spécifique d'application à un serveur d'application.

16. Procédé selon la revendication 14 ou 15, dans lequel la clé spécifique d'application est utilisée pour établir une communication sécurisée entre le dispositif mobile et le serveur d'application.

17. Procédé selon la revendication 15 ou 16, dans lequel le serveur d'application comprend un serveur de Protocole d'Ouverture de Session (SIP).

18. Procédé selon la revendication 15 ou 16, comprenant les étapes selon lesquelles :
la clé spécifique d'application est générée par un serveur d'authentification nominal, et
la clé spécifique d'application est envoyée au serveur d'application, éventuellement via un serveur d'authentification local (103).

19. Procédé selon l'une quelconque des revendications précédentes, comprenant l'étape selon laquelle :
une communication sécurisée est établie entre le dispositif mobile (100) et le serveur d'accès (105), une passerelle sans fil (203), et/ou le réseau (108), à l'aide des informations de sécurité.

20. Procédé selon la revendication 19, comprenant l'étape selon laquelle :
une communication sécurisée est établie à l'aide d'un mécanisme Sécurité du Protocole Internet (IPsec)/Echange de Clé Internet (IKE).

21. Procédé selon l'une quelconque des revendications précédentes, comprenant l'étape selon laquelle :
le serveur d'accès (105) configure, à l'aide du profil du terminal mobile, un tunnel IP sécurisé entre le serveur d'accès (105) et une passerelle de réseau d'accès (202) pour la connexion du serveur d'accès au réseau.

22. Procédé selon la revendication 21, comprenant l'étape selon laquelle :
le tunnel IP sécurisé est implémenté à l'aide du mécanisme de Sécurité du Protocole Internet (IPsec) et/ou du Protocole de Tunnellisation de Couche 2 (L2TP).

23. Procédé selon l'une quelconque des revendications précédentes, comprenant en outre l'étape selon laquelle :
une clé de sécurité spécifique d'application pour l'établissement d'une communication sécurisée est générée par exécution d'une fonction de hachage sur la clé maîtresse et sur une chaîne de nom d'application.

24. Procédé selon l'une quelconque des revendications précédentes, comprenant l'étape selon laquelle :
si le dispositif mobile (100) est autorisé,
la passerelle (200) envoie au point d'accès (209) ou au serveur d'accès (105) des informations permettant l'identification du dispositif mobile (100) et une instruction de fournir un service au dispositif mobile.

25. Procédé selon la revendication 24, comprenant l'étape selon laquelle :
la passerelle (200) envoie au point d'accès (209) ou au serveur d'accès (105) des informations de sécurité permettant l'établissement d'une communication sécurisée entre le dispositif mobile (100) et le point d'accès ou le serveur d'accès.

26. Procédé selon l'une quelconque des revendications précédentes, dans lequel le profil du dispositif mobile comprend :
éventuellement, des informations de niveau de service pour indiquer un niveau de service ;
éventuellement, des informations d'adresse de réseau pour le dispositif mobile (100) ;
éventuellement, des informations de services locales pour indiquer si le dispositif mobile (100) est ou non autorisé à utiliser des services locaux sur le réseau d'accès (106) ;
éventuellement, des informations de services globales pour indiquer les services que le dispositif mobile (100) est autorisé à utiliser ;
éventuellement, des informations temporelles pour indiquer la quantité de temps pendant lequel le dispositif mobile (100) est autorisé à accéder au réseau d'accès (106) ;
éventuellement, des informations de débit ou de quantité de données pour indiquer le débit de données ou la quantité de données que le dispositif mobile (100) est autorisé à envoyer et à recevoir tandis qu'il se trouve sur le réseau d'accès (106) ;
éventuellement, des informations de fréquence de nouvelle autorisation pour indiquer une fréquence avec laquelle le dispositif mobile devrait s'authentifier de nouveau auprès d'un serveur d'authentification nominal (110) ;
éventuellement, des informations de point d'extrémité de tunnel et de type de trafic pour indiquer, pour différents types de trafic, si les paquets de données transmis entre le dispositif mobile et le réseau doivent être mis en tunnel et, si tel est le cas, indiquer au moins des adresses IP et adresses de port, le type de tunnel et des informations de sécurité ; éventuellement des informations de sécurité locales pour indiquer si le dispositif mobile requière l'établissement d'une connexion locale sécurisée entre lui-même et le serveur d'accès.

27. Procédé selon l'une quelconque des revendications précédentes, comprenant l'étape selon laquelle :
le serveur d'accès (105) empêche le dispositif mobile (100) d'utiliser les services auxquels il n'est pas autorisé à accéder et fournit au dispositif mobile une qualité de service souscrite, d'après les informations de profil du dispositif mobile.

28. Procédé selon l'une quelconque des revendications précédentes, comprenant l'étape selon laquelle :
le serveur d'accès (105) détermine comment acheminer le trafic et s'il doit établir un tunnel IP sécurisé jusqu'à la passerelle de réseau d'accès (202) pour la connexion du serveur d'accès au réseau, d'après les informations de point d'extrémité de tunnel et de type de trafic contenues dans le profil du dispositif mobile.

29. Procédé selon la revendication 28, comprenant l'étape selon laquelle :
le serveur d'accès (105) établit un tunnel IP sécurisé jusqu'à chaque passerelle de réseau d'accès de réseaux nominaux respectifs.

30. Procédé selon l'une quelconque des revendications précédentes, comprenant les étapes selon lesquelles :
le dispositif mobile (100) est identifié à l'aide d'un numéro d'identité internationale d'abonné mobile (IMSI) ;
le dispositif mobile est identifié à l'aide d'un numéro de réseau numérique de services intégrés d'abonné mobile (MSISDN) ;
le dispositif mobile est identifié à l'aide d'un identifiant d'adresse réseau (NAI) ; et/ou
le dispositif mobile est identifié à l'aide d'une adresse IPv4 et/ou IPv6 et/ou d'une adresse de Contrôle d'Accès au Support (MAC).

31. Procédé selon l'une quelconque des revendications précédentes, comprenant les étapes selon lesquelles :
un réseau nominal du dispositif mobile (100) est identifié à l'aide d'un numéro d'identité internationale d'abonné mobile (IMSI), d'un numéro de réseau numérique de services intégrés d'abonné mobile (MSISDN) ou d'un identifiant d'adresse réseau ; et
une adresse réseau du serveur d'authentification nominal est identifiée à l'aide du réseau nominal.

32. Procédé selon l'une quelconque des revendications précédentes, comprenant l'étape selon laquelle :
le serveur d'accès (105) détermine si le profil du dispositif mobile spécifie que les données doivent être transmises via un tunnel à un réseau d'entreprise (108) ou une passerelle de réseau d'accès (202),
le serveur d'accès (105) attribue au dispositif mobile (100) une adresse IP choisie parmi un groupe d'adresses appartenant au réseau d'entreprise ou un réseau mobile domestique.

33. Procédé selon l'une quelconque des revendications précédentes, dans lequel les informations de sécurité comprennent une clé de sécurité, une durée de vie et un identifiant de dispositif mobile.

34. Réseau d'accès (106) comprenant :
un point d'accès (209) pour la connexion d'un dispositif mobile (100) ;
un serveur d'accès (105) destiné à fournir un accès à un autre réseau (108) ;
un mandataire d'authentification (103) destiné à obtenir des informations d'authentification auprès d'un serveur d'authentification nominal ; et
une passerelle (200) configurée pour authentifier le dispositif mobile (100) afin de donner au serveur d'accès (105) l'instruction de permettre un trafic de données entre le dispositif mobile et le réseau et pour envoyer au serveur d'accès (105) un profil de dispositif mobile et des informations de sécurité incluant une clé.

35. Procédé selon les revendications 1 à 33 ou réseau selon la revendication 34, dans lequel la passerelle (200) et le point d'accès (209) sont unitaires.

36. Procédé selon les revendications 1 à 33 ou réseau selon la revendication 34, dans lequel le serveur d'accès (105) et le point d'accès (209) sont unitaires.

37. Procédé selon les revendications 1 à 33 ou réseau selon la revendication 34, dans lequel un serveur d'authentification local (103) et une passerelle sans fil (203) sont unitaires.

38. Procédé selon les revendications 1 à 33 ou réseau selon la revendication 34, dans lequel le serveur d'accès (105) et une passerelle de réseau d'accès (203) entre le serveur d'accès et le réseau (108, 296) sont unitaires.

39. Procédé selon les revendications 1 à 33 ou réseau selon la revendication 34, dans lequel :
le réseau d'accès est un réseau sans fil ;
le dispositif mobile est un équipement utilisateur sans fil ;
le point d'accès est un point d'accès sans fil ; et
le serveur d'accès est un serveur d'accès sans fil, et dans lequel
le réseau d'accès, le dispositif mobile, le point d'accès et le serveur d'accès prennent en charge le Protocole Internet.

40. Procédé ou réseau selon la revendication 39, dans lequel :
le réseau d'accès (106) set un réseau local sans fil (WLAN) ;
le dispositif mobile (100) est un équipement utilisateur WLAN ;
le point d'accès (209) est un point d'accès WLAN ; et
le serveur d'accès (105) est un serveur d'accès WLAN.

41. Procédé ou réseau selon la revendication 39, dans lequel :
le réseau d'accès est un réseau à multiplexage par répartition en fréquences orthogonales (OFDM) ;
le dispositif mobile est un équipement utilisateur OFDM ;
le point d'accès est un point d'accès OFDM ; et
le serveur d'accès est un serveur d'accès OFDM.

42. Passerelle (200) à utiliser dans un réseau d'accès (106), comprenant un point d'accès (209), un serveur d'accès (105) et un mandataire d'authentification (103), la passerelle étant configurée pour échanger des informations d'authentification avec un serveur d'authentification nominal (203) via le mandataire d'authentification local, pour authentifier le dispositif mobile (100) et donner au serveur d'accès (105) l'instruction de permettre un trafic de données à destination et en provenance du dispositif mobile (100), et pour envoyer au serveur d'accès (105) un profil de dispositif mobile et des informations de sécurité incluant une clé.

43. Passerelle selon la revendication 42, configurée pour envoyer un défi selon un Protocole d'Authentification Extensible (EAP).

44. Passerelle selon la revendication 42 ou 43, configurée pour donner au serveur d'accès des instructions sur la manière d'acheminer le trafic de données à destination et en provenance du dispositif mobile.
